# EUROPEAN PATENT SPECIFICATION

(11) **EP 2 070 629 B1**
(45) Date of publication and mention of the grant of the patent: **27.11.2013**
(21) Application number: 08738572.0
(22) Date of filing: 14.04.2008
(51) Int. Cl.: B23K 9/29

(54) **WELDING TORCH**
SCHWEISSBRENNER
TORCHE DE SOUDAGE

(30) Priority: 09.10.2007 JP 2007263102
(43) Date of publication of application: 17.06.2009
(73) Proprietor: Panasonic Corporation, Kadoma-shi Osaka 571-8501 (JP)
(72) Inventor: MUKAI, Yasushi, 2-1-61, Shiromi, Chuo-ku, Osaka-shi, Osaka 540-6207 (JP); MISHIMA, Toshiyuki, 2-1-61, Shiromi, Chuo-ku, Osaka-shi, Osaka 540-6207 (JP)
(74) Representative: Schwabe - Sandmair - Marx
(86) International application number: PCT/JP2008/000966
(87) International publication number: WO 2009/047873

(56) References cited:
- WO-A1-99/30863
- JP-A- 10 193 122
- JP-A- 57 134 279
- JP-A- 2002 059 265
- JP-A- 2002 059 265
- JP-U- 61 067 974
- US-A- 2 943 183

## Description

The present invention relates to a welding torch having a forced power feeder mechanism which is for example used for consumable electrode gas shield arc welding.

### BACKGROUND ART

A collet type forced power feeder structure is known as a forced power feeder mechanism (Patent document 1). This is a structure such that the power feeder is cylindrical and its inner diameter is nearly equal to the outer diameter of the welding wire (hereinafter called wire), and the cylindrical feeder is divided into a plurality of sections on a plane including the central axis or provided with a slit formed by slitting, and the inner diameter surface of the cylindrical feeder is pressed against the wire by an activating means.

The configuration and action of a welding torch having a collet type forced power feeder structure disclosed in Patent document 1 is briefly described in the following.

The cylindrical chip is formed with a through-hole as a passage for the wire that is a consumable electrode at the axial center thereof, and provided with conical projections at either end, and its end portion is at least halved by slitting. The cylindrical chip is disposed between the chip holder having a conical depression and a conical depression at the front end of the torch body detachable from the torch body base. The pressure means is formed by a spring support member disposed at the rear end of the torch body, of which the axial position can be freely set by a screw or the like, and a spring member disposed between the spring support member and the chip holder. The chip holder is pressed against the cylindrical chip by the pressure means, and a power feed member is connected to the torch body.

In the above configuration, the pressure generated by the pressure means is applied to both ends of the cylindrical chip and changed in direction to the centripetal direction due to the conical slopes at both ends, and thereby, the wire is always held by the conical chip. Accordingly, even in case the conical chip becomes worn, the wire is axially held and free from change of the wire position. Also, power feed to the wire is reliably executed at a constant position and it is possible to obtain an excellent welding result.

However, a conventional welding torch having a collet type forced power feeder structure as described above is actually hardly prevalent because of the following problems.

Particularly, as a welding torch used for robot welding, in order to cope with complicated jigs and work, a so-called curved torch with the torch body partially curved and improved in accessibility to the work or jig is widely employed. However, the method mentioned in Patent document 1 cannot be directly used for a curved torch.

And, when it is intended to use the method for a curved torch, a first idea is such that the pressure means is disposed not at the rear portion of the torch body but at the front end side beyond the curved portion of the torch body. However, the structure becomes complicated at the front end, and also, as pointed out in Patent document 1, the spring member that is a pressure means may deteriorate due to the influence of arc heat generated during the welding.

Also, in the case of the conventional welding torch described above, the inner diameter surface of the cylindrical chip gradually wears, and therefore, there is provided a through-hole nearly equal to the wire diameter in the initial condition, but in this case, the wire cannot be smoothly set through because it is caught at the rear end side of the cylindrical chip that is the wire insertion side.

Further, in the case of the conventional welding torch described above, when the cylindrical chip is divided into a plurality of sections by slitting, the inner diameter is displaced in the narrowing direction even in case of no pressure applied by the pressure means. Consequently, the wire cannot be set through, and it is necessary to completely remove the cylindrical chip or the chip body end portion holding the cylindrical chip before setting the wire. After that, the plurality of divided cylindrical chips must be individually abutted on the wire and must be set on the front end of the chip body while keeping them in a state of being held, resulting in considerable worsening of the workability.

On the other hand, when the cylindrical chip is halved instead of dividing into a plurality of portions, the pressure given by the pressure means is required to be high enough to be able to deform the cylindrical chip itself in accordance with wear of the cylindrical chip. Accordingly, in the initial condition of less wear, it is configured in that the axial position of the spring support member can be freely set by a screw or the like so that the pressure can be adjusted in accordance with wear of the cylindrical chip. However, it is very difficult to adjust the pressure in accordance with wear of the cylindrical chip that cannot be checked from outside, and it is almost impossible to make reliable adjustments at all times during the production.
Patent document 1: Unexamined Japanese Patent Publication H2-27074

JP 2002-059265 A relates to a torch for consumable electrode type gas shielded metal arc welding. In this torch for the consumable electrode type gas shielded metal arc welding in which a wire passing hole is formed in a center part in the axial direction of the welding torch, and a wire is brought into contact with a power supply chip to supply the power to the wire, a conventional power supply chip is split into an outer chip and an inner chip and a chip case in an attachable/detachable manner, a compression spring having the wire passing hole in the center in the axial direction and the inner chip are disposed inside the outer chip and the chip case; and the compression spring presses the inner chip to allow the inner chip to be inscribed with the outer chip.

### SUMMARY Of THE INVENTION

It is an object of the present invention to provide an improved and useful welding torch in which the above-mentioned problems are eliminated.

In order to achieve the above-mentioned object, there is provided a welding torch according to claim 1.

Advantageous embodiments are defined by the dependent claims.

Advantageously, a welding torch comprises a cylindrical feeder collet formed with a slit in the front end portion for feeding power to a welding wire internally set through; a collet case for storing the feeder collet therein, having an abutment on which the front end of the feeder collet is abutted; a flexible inner tube for leading the welding wire to the feeder collet; a torch body with the inner tube inserted therein and the collet case detachably disposed at the front end thereof; and a pressure mechanism for pressurizing the feeder collet toward the end of the welding wire, wherein there is provided a taper surface on at least any one of the front end of the feeder collet and the abutment of the collet case.

Thus, the feeder collet can be pressurized in the welding wire feeding direction by using the pressure means via the inner tube having flexibility (bending property), and thereby, the welding wire can be reliably held by the feeder collet. Accordingly, even in the case of a so-called curved torch of which the torch body of the welding torch is at least partially curved, it is possible to realize a forced feeder mechanism.

### BRIEF DESCRIPTION OF THE DRAWINGS

Fig. 1 is a schematic sectional view showing a welding torch in the preferred embodiment 1 of the present invention.
Fig. 2 is an enlarged sectional view showing a collet case in the preferred embodiment 1 of the present invention.
Fig. 3 is an enlarged sectional view showing an essential portion of a torch body in the preferred embodiment of the present invention.
Fig. 4A is a top view of a feeder collet in the preferred embodiment of the present invention.
Fig. 4B is a front view of a feeder collet in the preferred embodiment of the present invention.
Fig. 4C is a bottom view of a feeder collet in the preferred embodiment of the present invention.
Fig. 5 is an enlarged sectional view showing an essential portion of a torch body according to an example not covered by the present invention.
Fig. 6 is an enlarged sectional view showing a collet case in the example of figure 5.

### DESCRIPTION OF THE REFERENCE NUMERALS AND SIGNS

- 1: Torch cable
- 1a: Torch body connection
- 1b, 3c: Wire guide storing section
- 2: Conduit tube
- 3: Torch body
- 3a: Torch cable connection
- 3b: Collet case connection
- 4, 12: Inner tube
- 4a, 12a: Wire guide connection
- 4b, 12b: Conduit tube storing section
- 4c: Coiled portion
- 5: Spring
- 6: Feeder collet
- 6a: Taper surface
- 6b: Slit portion
- 6c: Feeding section
- 6d: Wire insertion opening
- 7: Collet case
- 7a: Insulative guide
- 7b: Abutment
- 8: Insulating cylinder
- 9: Orifice
- 10: Nozzle
- 11: Wire
- 100: Welding torch

### DETAILED DESCRIPTION OF THE PREFERRED EMBODIMENTS

### Preferred Embodiment

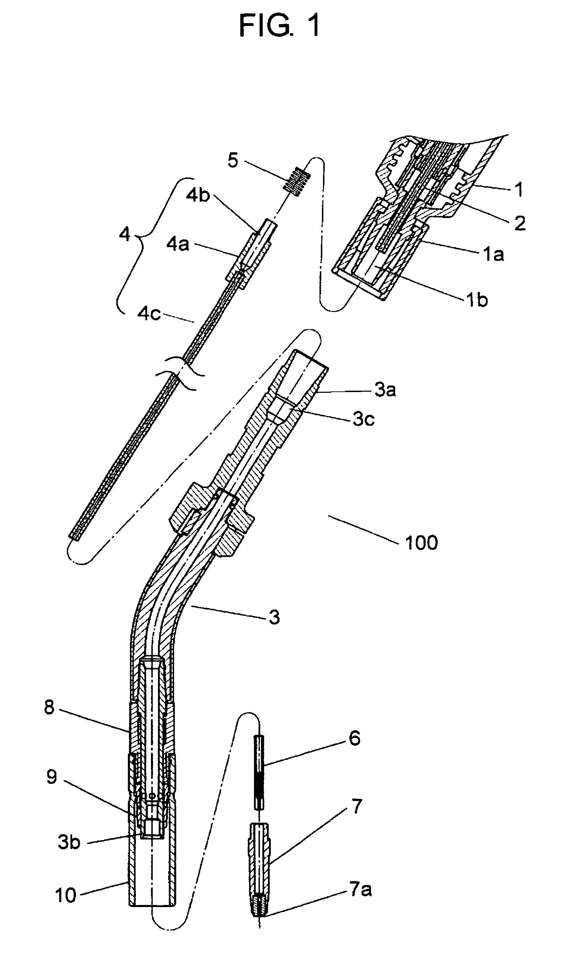

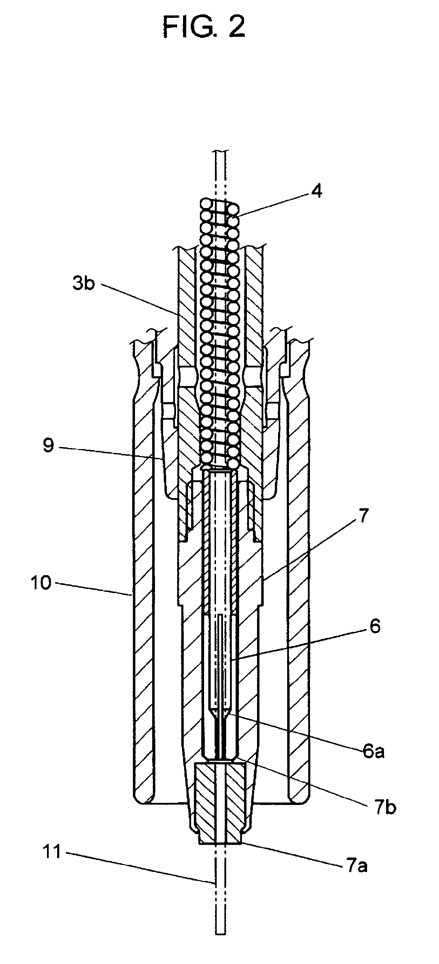

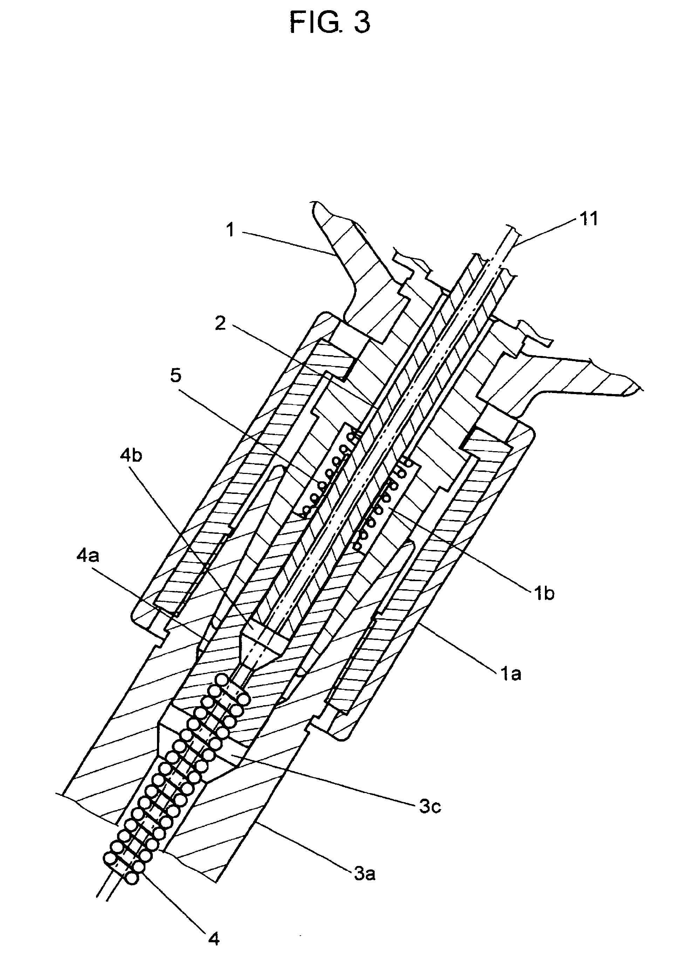

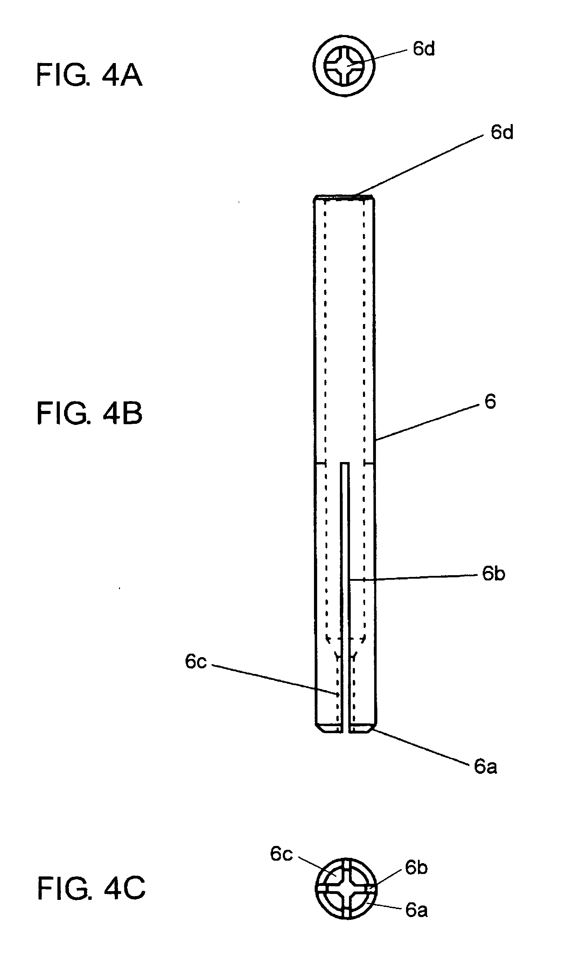

The preferred embodiment of the present invention will be described in the following with reference to Fig. 1 to Fig. 4. Fig. 1 is a schematic sectional view showing a welding torch in the present preferred embodiment. Fig. 2 is an enlarged sectional view showing a collet case and its surrounding in the present preferred embodiment. Fig. 3 is an enlarged sectional view showing an essential portion of a torch body and its surrounding in the present preferred embodiment. Fig. 4A to Fig. 4C respectively show the top view, front view, and bottom view of a feeder collet in the present preferred embodiment.

In Fig. 1 to Fig. 4C, torch cable 1 is fitted to a wire feeding device (not shown) at the rear end (not shown) thereof. Torch cable 1 is provided with a hole for axially inserting welding wire 11 (hereinafter called wire, see Fig. 2). Also, at the front end portion of torch cable 1, there is provided torch body connection 1a for detachably connecting torch body 3. And, torch body connection 1a is internally provided with wire guide storing section 1b that is a space for storing wire guide connection 4a described later in such a manner as to be slidable in the axial direction.

Torch body 3 of welding torch 100 is partially curved as shown in Fig. 1, and is detachably connected to torch body connection 1a of torch cable 1 by means of torch cable connection 3a disposed at the rear end portion. For example, torch body connection 1a is a box nut, and torch cable connection 3a is realized as a screw portion threadedly engaging the box nut that is torch body connection 1a. Further, torch body 3 is provided with wire guide storing section 3c that is a space for storing wire guide connection 4a in torch cable connection 3a in such a manner as to be slidable in the axial direction. Also, torch body 3 is provided with a hole for inserting inner tube 4 described later along the central axis of torch body 3. Further, at the front end portion of torch body 3, there is provided collet case connection 3b for detachably connecting collet case 7 described later. Also insulating cylinder 8 is disposed at the front end side of torch body 3, and nozzle 10 is disposed at the front end side of insulating cylinder 8. Nozzle 10 is internally provided with orifice 9.

Collet case 7 is cylindrical, and it is detachably connected to collet case connection 3b of torch body 3 at the rear end thereof. For example, collect case 7 and torch body 3 are threadedly engaged and securely connected to each other. Feeder collet 6 is stored in collet case 7 in such a manner as to be slidable in the axial direction, and it is provided with tapered abutment 7b on which the front end of feeder collet 6 is abutted (see Fig. 2). At the front end of collet case 7, there is provided insulative guide 7a made of insulating ceramic having a wire insertion hole a little larger than the outer diameter of wire 11.

Feeder collet 6 is provided with taper surface 6a at the end thereof as shown in Fig. 4A to Fig. 4C. Also, at the end (a part in the wire feeding direction) of feeder collet 6, there is provided feeding section 6c for feeding power to wire 11, coming in contact with wire 11, of which the inner diameter is nearly equal to the outer diameter of wire 11. Further, at the rear end (other than the front end portion) of feeder collet 6, there is provided wire insertion opening 6d of which the inner diameter is larger than the inner diameter at front end portion. Also, feeder collet 6 is provided with at least one slit portion 6b by forming a long slit longer in length than feeding section 6c in the axial direction from the tip thereof.

Inner tube 4 described above is a member that is also called a liner or neck liner. Inner tube 4 has coiled portion 4c with a wire material having a circular section spirally wound thereon as shown in Fig. 1, which has flexibility (bending property) to go along the curved shape of torch body 3. And, it is inserted from torch cable connection 3a side with respect to torch body 3, and the end of inner tube 4 is abutted on the rear end of feeder collet 6. Further, inner tube 4 internally includes conduit tube storing section 4b that is a space for storing conduit tube 2 of torch cable 1 in such a manner as to be slidable in the axial direction. Also, the length of inner tube 4 is adjusted so that wire guide connection 4a disposed at the rear end is not abutted on the bottom of each of wire guide storing section 1b of torch cable 1 and wire guide storing section 3c of torch body 3. Inner tube 4 is preferable to be a tube-like flexible member having wire guide connection 4a instead of the one with a wire material having a circular section spirally wound thereon.

Spring 5 is a spring member as a pressure mechanism formed of a compression spring, and its one end is fixed on the rear end of wire guide connection 4a. And, the other end of spring 5 is abutted on the bottom of wire guide storing section 1b. In this way, inner tube 4 and feeder collet 6 are pressurized in the feeding direction of wire 11.

Conduit tube 2 is inserted from the rear end (not shown) of torch cable 1, and the length is adjusted so that the front end is not abutted on the bottom of conduit tube storing section 4b of inner tube 4.

The operation of welding torch 100 having the above configuration will be described in the following.

Wire 11 is fed by a wire feeding device (not shown), and is guided to conduit tube 2 at the axial center of torch cable 1 and inner tube 4 of welding torch 100. And, it is inserted into wire insertion opening 6d (see Fig. 4B) of feeder collet 6 and passes through feeding section 6c (see Fig. 4B), then it is ejected from the tip end of insulative guide 7a of collet case 7, passing there through. In this case, feeder collet 6 is pressed in the feeding direction of wire 11 by the pressure applied by spring 5 being compressed via inner tube 4. Due to the pressure, taper surface 6a of feeder collet 6 abutting taper-like abutment 7b disposed in collet case 7 acts to deform slit portion 6b in the centripetal direction, and thereby, wire 11 is held with the inner diameter surface of feeding section 6c. In this way, the welding power supplied from the welding power supply device (not shown) is reliably fed to wire 11 from feeding section 6c contacted thereon by the pressure via torch cable 1 and torch body 3.

As described above, according to the present preferred embodiment, collet feeder 6 can be pressurized by spring 5 that is a pressure means via inner tube 4 having flexibility (bending property). As a result, it is possible to realize a forced power feeder mechanism even in the case of a so-called curved torch wherein torch body 3 is at least partially curved.

Also, spring 5 that provides a pressure is disposed in a position sufficiently apart from the front end of welding torch 100, and therefore, it is free from the influence of arc heat generated during the welding and there is no fear of its deterioration caused due to such arc heat.

Further, since inner tube 4 is coil-formed with a wire material having a circular section spirally wound thereon, it is possible to realize inexpensive inner tube 4 which is flexible in the radial direction.

Also, spring 5 is disposed in a space formed at the connection between torch body 3 and torch cable 1. Accordingly, torch body 3 and torch cable 1 can be easily disconnected from each other by torch body connection 1a and torch cable connection 3a. As a result, it is easy to perform the maintenance such as replacement of spring 5.

Further, the inner diameter of the front end portion of feeder collet 6, which serves as feeding section 6c, is nearly equal to the diameter of wire 11, and the inner diameter of the rear end portion serving as wire insertion opening 6d is larger than the inner diameter of the front end portion. In this way, wire 11 can be easily set through feeder collet 6, and it is possible to realize a welding torch having a forced power feeder mechanism which may assure excellent workability.

Also, the slit length of slit portion 6b of feeder collet 6 is longer than the length of feeding section 6c whose inner diameter of the front end portion is nearly equal to the diameter of wire 11, and it is possible to realize feeder collet 6 being less in drag on deformation. Accordingly, there is less resistance to feeding of wire 11, and it is possible to realize a welding torch having a forced power feeder mechanism for which it is not necessary to adjust the pressure in accordance with wear of feeder collet 6.

Further, wire 11 is guided, and also, for protecting feeder collet 6 from spatter, insulative guide 7a made of insulating ceramic which is provided with wire insertion hole a little larger than the wire diameter is disposed at the front end of collet case 7. In this way, feeder collet 6 can be prevented from damage due to spatter, and it is possible to prevent the occurrence of power feed to wire 11 at a place other than the pertinent feeding section due to sticking of spatter. Accordingly, it is possible to realize a welding torch having a forced power feeder mechanism which may assure a long life and stable operation.

In the present preferred embodiment, abutment 7b of collet case 7 and taper surface 6a of feeder collet 6 are tapered as described. However, the present invention is not limited to this configuration, and it is also preferable to make one of them tapered because only needed is to deform slit portion 6b of feeder collet 6 in the centripetal direction.

Also, in the present preferred embodiment, inner tube 4 is coil-formed with a wire material having a circular section spirally wound thereon as described, but it is also allowable to be cylindrical instead of being coil-formed.

Further, in the present preferred embodiment, spring 5 is used as a pressure mechanism as described, but it is also preferable to use, in place of spring 5, an elastic member having elasticity in the feeding direction of wire 11, which internally allows the insertion of conduit tube 2.

### Example not corresponding to the claimed invention

In this example, the same configuration as in the preferred embodiment is given same reference numeral, and the detailed description is omitted. This preferred embodiment differs from the preferred embodiment in such point that instead of applying a pressure to feeder collet 6 by means of inner tube 4 and spring 5 in the preferred embodiment, a pressure is applied to feeder collet 6 by means of inner tube 12 having elasticity without using spring 5.

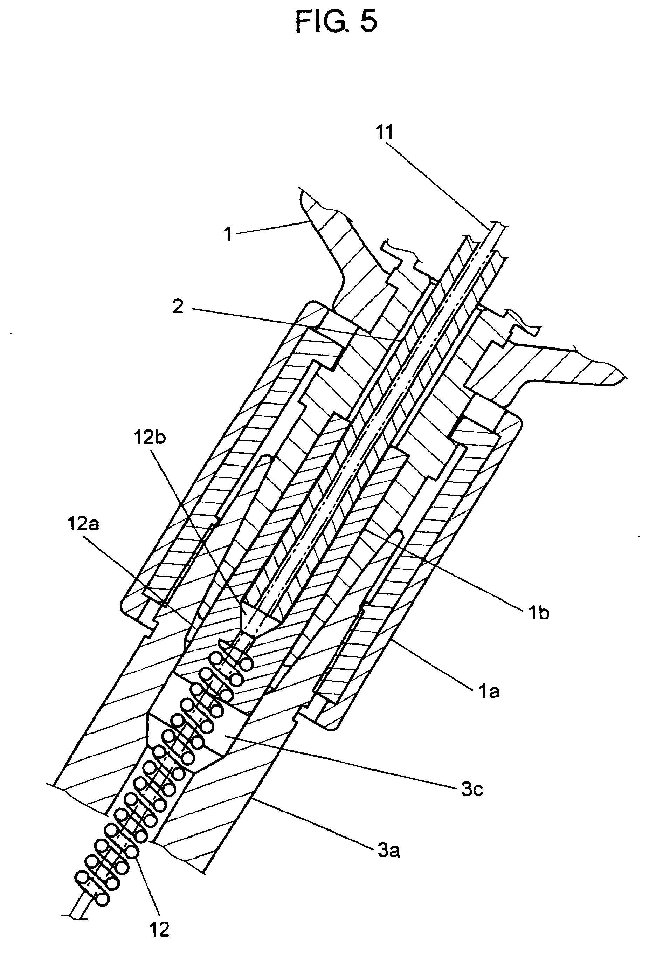

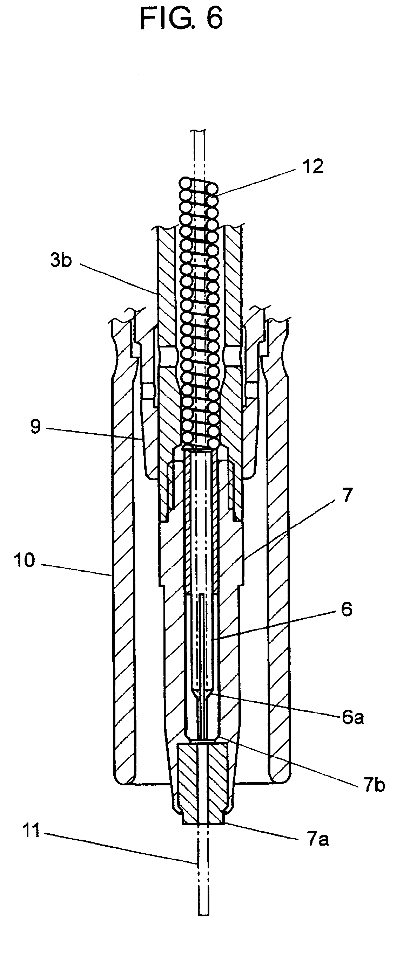

Fig. 5 is an enlarged view showing an essential portion of a torch body in the present example. Fig. 6 is an enlarged view showing a collet case in the example. In Fig. 5 and Fig. 6, inner tube 12 is coil-formed having compressive elasticity in the axial direction (lengthwise direction), which is formed with a wire material having a circular section spacedly spirally wound thereon. And, the same as in the preferred embodiment, it has flexibility (bending property) to go along the curved shape of torch body 3. Further, inner tube 12 is inserted into the torch body (not shown) from torch cable connection 3a side, and the front end of inner tube 12 abuts the rear end of feeder collet 6. On the other hand, the rear end of inner tube 12 has conduit tube storing section 12b for storing conduit tube 2 therein in such manner as to be slidable in the axial direction. Further, wire guide connection 12a disposed at the rear end of inner tube 12 abuts the bottom of wire guide storing section 1b of torch cable 1. In this way, the rear end of inner tube 12 having elasticity abuts wire guide storing section 1b, and the front end thereof abuts the feeder collet, and thereby, feeder collet 6 is pressurized forward in the axial direction. Inner tube 12 is preferable to have a length enough to be compressed when torch body 3 and torch cable 1 are connected to each other.

The operation of the welding torch having the above configuration will be described in the following. Wire 11 is fed by a wire feeding device (not shown), and is guided to conduit tube 2 at the axial center of torch cable 1 and inner tube 12 in welding torch 100. And, as shown in Fig. 4B, it is inserted into wire insertion opening 6d of feeder collet 6 and passes through feeding section 6c, then it is ejected from the end of insulative guide 7a disposed in collet case 7, passing there through.

In this case, feeder collet 6 is pressed forward in the axial direction by the pressure of inner tube 12 being compressed, and comes in contact with tapered abutment 7b disposed in collet case 7. Consequently, slit portion 6b (see Fig. 4B) is deformed in the centripetal direction due to taper surface 6a (see Fig. 4B) of feeder collet 6, and thereby, wire 11 is held with the inner diameter surface of feeding section 6c (see Fig. 4B). The welding power supplied from the welding power supply (not shown) is reliably fed to wire 11 from feeding section 6c held thereon with the pressure via torch cable 1, torch body 3, and collet case 7.

As described above, according to the present example, collet feeder 6 can be pressurized inner tube 12 having flexibility (bending property) and elasticity in the lengthwise direction. As a result, it is possible to realize a forced power feeder mechanism even in the case of a so-called curved torch wherein torch body 3 is at least partially curved.

Also, inner tube 12 is coil-formed with a wire material having a circular section spirally wound thereon and is provided with a pressing function as a pressure mechanism, and therefore, it requires no separate pressure mechanism. Accordingly, it is possible to realize an inexpensive forced power feeder mechanism.

Further, in the example, inner tube 12 is coil-formed with a wire material having a circular section spirally wound thereon as described, but the tube is also allowable to be cylindrical instead of being coil-formed provided that it is elastic.

Spring 5 is used as a pressure mechanism in the preferred embodiment, and inner tube 12 having elasticity is used as a pressure mechanism in the non-covered example. However, it is also preferable to use both of spring 5 and inner tube 12 having elasticity as a pressure mechanism in the configuration.

### INDUSTRIAL APPLICABILITY

The present invention is excellent in accessibility to the work and jigs as a curved torch, which also ensures low costs, excellent workability and easy maintenance. In addition, it comprises a forced power feeder mechanism that may assure a long life and stable operation, which is industrially useful as a welding torch having a forced power feeder mechanism.

## Claims

1. A welding torch comprising:
a cylindrical feeder collet (6) formed with a slit (6b) axially extending from a front end thereof for feeding power to a welding wire (11) internally set through;
a collet case (7) for storing the feeder collet (6) therein, having an abutment (7b) on which the front end of the feeder collet (6) is abutted;
a inner tube (4) for leading the welding wire (11) to the feeder collet (6);
a torch body (3) with the inner tube (4) inserted therein and the collet case (7) detachably disposed at the front end thereof; and
a pressure mechanism for pressurizing the feeder collet (6) toward the end of the welding wire (11),
wherein there is provided a taper surface (6a) on at least any one of the front end of the feeder collet (6) and the abutment (7b) of the collet case (7),
wherein the torch includes a torch body connection (1a) for detachably connecting torch body (3) disposed at the front end of a torch cable (1) for feeding the welding wire (11) and torch body (3) includes a torch cable connection (3a) detachably disposed at a rear end thereof, **characterized in that**
the inner tube (4) is flexible and includes a wire guide connection (4a) detachably disposed at the rear end thereof; the wire guide connection (4a) being internally provided with a conduit tube receiving section (4b) that is a space for receiving a front end of a conduit tube (2) of the torch cable (1); and
the pressure mechanism is formed of a spring member (5) whose one end abuts the torch body connection (1a) and the other end abuts the wire guide connection (4a).

2. The welding torch of claim 1, wherein the torch body (3) is partially curved.

3. The welding torch of claim 1, wherein the inner tube (4; 12) is coil-formed with a wire material having a circular section spirally wound thereon.

4. The welding torch of claim 1, wherein the inner tube (4) has lengthwise elasticity, and the pressure mechanism uses elasticity of the inner tube (12).

5. The welding torch of claim 1, wherein the spring member (5) is fixed on the wire guide connection (4a).

6. The welding torch of claim 1, wherein the front end of the feeder collet (6) is provided with a feeding section (6c) for feeding power to the welding wire (11), and the inner diameter of the feeding section (6c) is equal to the diameter of the welding wire (11), and the inner diameter of the rear end portion of the feeder collet (6) is larger than the diameter of the welding wire (11).

7. The welding torch of claim 6, wherein the length of the slit portion (6b) is longer than the length of the feeding section (6c).

8. The welding torch of claim 1, wherein the collet case (7) has an insulative guide (7a) at the front end thereof which has a diameter larger than the diameter of the welding wire (11).

9. The welding torch of claim 2, wherein the inner tube (4) is flexible and bends along a curved shape of the torch body (3).

## Patentansprüche

1. Schweißbrenner, der umfasst:
eine zylindrische Zuführklemmbuchse (6), die mit einem Schlitz (6b) gebildet ist, der sich axial von ihrer Stirnseite erstreckt, um einem Schweißdraht (11) Leistung zuzuführen, der im Inneren hindurchgeführt ist,
ein Klemmbuchsengehäuse (7), um darin die Zuführklemmbuchse (6) zu lagern, die ein Auflager (7b) besitzt, auf dem die Stirnseite der Zuführklemmbuchse (6) anliegt;
eine innere Röhre (4), um den Schweißdraht (11) zu der Zuführklemmbuchse (6) zu leiten;
einen Brennerkörper (3), in den die innere Röhre (4) eingeführt ist und an dessen Stirnseite das Klemmbuchsengehäuse (7) abnehmbar angeordnet ist; und
einen Druckmechanismus, um die Zuführklemmbuchse (6) in Richtung des Endes des Schweißdrahtes (11) unter Druck zu setzen,
wobei auf der Stirnseite der Zuführklemmbuchse (6) oder dem Auflager (7b) des Klemmbuchsengehäuses (7) eine Neigungsfläche (6a) vorgesehen ist,
wobei der Brenner eine Brennerkörperverbindung (1a) enthält, um den Brennerkörper (6) abnehmbar zu befestigen, die an der Stirnseite eines Brennerkabels (1) zum Einspeisen des Schweißdrahtes (11) angeordnet ist, und wobei der Brennerkörper (3) eine Brennerkabelverbindung (3a) enthält, die an seinem rückwärtigen Ende abnehmbar angeordnet ist, **dadurch gekennzeichnet, dass**
die innere Röhre (4) flexibel ist und eine Drahtführungsverbindung (4a) enthält, die an ihren rückwärtigen Ende abnehmbar angeordnet ist, wobei die Drahtführungsverbindung (4a) im Innern mit einem Leitungsröhrenempfangsabschnitt (4b) ausgestattet ist, der ein Raum für das Empfangen einer Stirnseite einer Leitungsröhre (2) des Brennerkabels (1) ist; und
der Druckmechanismus aus einem Federelement (5) gebildet ist, wovon ein Ende an der Brennerkörperverbindung (1a) anliegt und das andere Ende an der Drahtführungsverbindung (4a) anliegt.

2. Schweißbrenner nach Anspruch 1, wobei der Brennerkörper (3) teilweise gebogen ist.

3. Schweißbrenner nach Anspruch 1, wobei die innere Röhre (4; 12) mit einem Drahtmaterial mit einem kreisförmigen Querschnitt, das spiralförmig auf sie gewickelt ist, zur Spule geformt ist.

4. Schweißbrenner nach Anspruch 1, wobei die innere Röhre (4) eine Längselastizität aufweist und der Druckmechanismus die Elastizität der inneren Röhre (12) verwendet.

5. Schweißbrenner nach Anspruch 1, wobei das Federelement (5) auf der Drahtführungsverbindung (4a) befestigt ist.

6. Schweißbrenner nach Anspruch 1, wobei die Stirnseite der Zuführklemmbuchse (6) mit einem Zuführabschnitt (6c) ausgestattet ist, um dem Schweißdraht (11) Leistung zuzuführen, und der innere Durchmesser des Zuführabschnitts (6c) gleich dem Durchmesser des Schweißdrahtes (11) ist und der innere Durchmesser des rückwärtigen Endabschnitts der Zuführklemmbuchse (6) größer als der Durchmesser des Schweißdrahtes (11) ist.

7. Schweißbrenner nach Anspruch 6, wobei die Länge des Schlitzabschnitts (6b) länger als die Länge des Zuführabschnitts (6c) ist.

8. Schweißbrenner nach Anspruch 1, wobei das Klemmbuchsengehäuse (7) eine isolierende Führung (7a) an seiner Stirnseite besitzt, die einen Durchmesser aufweist, der größer als der Durchmesser des Schweißdrahtes (11) ist.

9. Schweißbrenner nach Anspruch 2, wobei die innere Röhre (4) flexibel ist und sich entlang einer Kurvenform des Brennerkörpers (3) biegt.

## Revendications

1. Chalumeau comprenant :
un manchon d'alimentation cylindrique (6) formé avec une fente (6b) s'étendant axialement depuis son extrémité avant pour l'alimentation en électricité d'un fil de soudure (11) le traversant intérieurement ;
un porte-manchon (7) pour porter le manchon d'alimentation (6) ayant une butée (7b) contre laquelle l'extrémité avant du manchon d'alimentation (6) est en appui ;
un tube interne (4) pour conduire le fil de soudure (11) au manchon d'alimentation (6) ;
un corps de chalumeau (3) dans lequel est inséré le tube interne (4) et à l'extrémité avant duquel est disposé de manière détachable le porte-manchon (7) ; et
un mécanisme de pression pour mettre le manchon d'alimentation (6) sous pression en direction de l'extrémité du fil de soudure (11),
où une surface effilée (6a) est prévue sur au moins l'une des extrémités avant du manchon d'alimentation (6) et de la butée (7b) du porte-manchon (7),
où le chalumeau comprends une connexion de corps de chalumeau (1a) pour connecter le corps de chalumeau (3) de manière détachable, disposée à l'extrémité avant d'un câble de chalumeau (1) pour alimenter en fil de soudure (11) et où un corps de chalumeau (3) comprends une connexion de câble de chalumeau (3a) disposée de manière détachable à son extrémité arrière, **caractérisé en ce que**
le tube interne (4) est flexible et comprends une connexion (4a) d'un guidage de fil disposée de manière détachable à son extrémité arrière, la connexion (4a) de guidage de fil disposant en interne d'une section de réception d'un tube de conduite (4b) formant un espace pour recevoir une extrémité avant d'un tube de conduite (2) du câble de chalumeau (1) ; et
le mécanisme de pression est formé par un organe de ressort (5) dont une extrémité est en appui sur la connexion de corps de chalumeau (1a) et l'autre extrémité est en appui sur la connexion de guidage de fil (4a).

2. Chalumeau selon la revendication 1, où le corps de chalumeau (3) est partiellement courbé.

3. Chalumeau selon la revendication 1, où le tube interne (4 ; 12) est en forme de bobine avec un fil de soudure ayant une coupe circulaire enroulé en spirale sur le tube.

4. Chalumeau selon la revendication 1, où le tube interne (4) a une élasticité longitudinale et le mécanisme de pression utilise l'élasticité du tube interne (12).

5. Chalumeau selon la revendication 1, où l'organe de ressort (5) est fixé sur la connexion de guidage de fil (4a).

6. Chalumeau selon la revendication 1, où l'extrémité avant du manchon d'alimentation (6) dispose d'une section d'alimentation (6c) pour alimenter le fil de soudure (11) en électricité, et le diamètre interne de la section d'alimentation (6c) est égal au diamètre du fil de soudure (11), et le diamètre interne de la partie arrière du manchon d'alimentation (6) est plus grand que le diamètre du fil de soudure (11).

7. Chalumeau selon la revendication 6, où la longueur de la partie fendue (6b) est plus longue que la longueur de la section d' alimentation (6c).

8. Chalumeau selon la revendication 1, où le porte-manchon (7) comprend un guidage isolant (7a) à son extrémité avant dont le diamètre est plus grand que le diamètre du fil de soudure (11).

9. Chalumeau selon la revendication 2, où le tube interne (4) est flexible et se plie selon une forme courbée du corps de chalumeau (3).
